(19) Europäisches Patentamt
European Patent Office
Office européen des brevets

(11) Veröffentlichungsnummer : **0 310 011 B1**

(12) # EUROPÄISCHE PATENTSCHRIFT

(45) Veröffentlichungstag der Patentschrift : **24.07.91 Patentblatt 91/30**

(51) Int. Cl.$^5$ : **C08J 3/24**, C08G 63/91, C08L 63/10, C09D 163/10

(21) Anmeldenummer : **88115953.7**

(22) Anmeldetag : **28.09.88**

(54) **Härtungskomponente und deren Verwendung.**

(30) Priorität : **01.10.87 DE 3733182**

(43) Veröffentlichungstag der Anmeldung : **05.04.89 Patentblatt 89/14**

(45) Bekanntmachung des Hinweises auf die Patenterteilung : **24.07.91 Patentblatt 91/30**

(84) Benannte Vertragsstaaten : **AT BE CH DE ES FR GB GR IT LI LU NL SE**

(56) Entgegenhaltungen : **EP-A- 0 161 697**

(73) Patentinhaber : **HOECHST AKTIENGESELLSCHAFT**
**Postfach 80 03 20**
**W-6230 Frankfurt am Main 80 (DE)**

(72) Erfinder : **Kubillus, Uwe, Dr.**
**Korfesstr. 19**
**W-3300 Braunschweig (DE)**
Erfinder : **Brindöpke, Gerhard, Dr.**
**Loreleistr. 18**
**W-6230 Frankfurt 80 (DE)**
Erfinder : **Plum, Helmut, Dr.**
**Nibelungenstr. 3**
**W-6204 Taunusstein (DE)**

**EP 0 310 011 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Härtung von Polyolharzen mit Polyisocyanaten ist bekannt. Diese Systeme haben sich zum Teil gut bewährt und besitzen teilweise auch sogenannte kalthärtende Eigenschaften.

Aus Gründen des Umweltschutzes und der Arbeitssicherheit ist es jedoch wünschenswert, über isocyanatfreie Lacksysteme zu verfügen, die unter Berücksichtigung ökonomischer Faktoren möglichst bei Raumtemperatur aushärten und Lackfilme hoher Qualität ergeben.

Ein isocyanatfreies Lacksystem, das auf der Michael-Addition basiert, ist beispielsweise aus der DE-Patentschrift 835 809 bekannt. Hierin werden als CH-aktive Verbindungen (Michael-Donatoren) Substanzen eingesetzt, die mindestens zwei durch negativierende Gruppen aktivierte Methylen- oder Methingruppen enthalten (u.a. Acetylacetate, Acetylacetamide, Cyanoacetate). Als ungesättigte Substanzen (Michael-Acceptoren) dienen Verbindungen, die mindestens zwei durch eine negativierende Gruppe aktivierte Doppelbindungen aufweisen (u.a. Ester oder Amide der Acryl- und/oder Methacrylsäure). In der Praxis sind zur vollständigen Aushärtung der obigen Systeme jedoch höhere Temperaturen notwendig.

Das gleiche Härtungsprinzip wird gemäß der EP-A-161 697 verwendet, wobei als CH— aktive Substanzen Malonsäureester-Gruppen enthaltende Oligomere bzw. Polymere fungieren. Die Vernetzungsreaktion bei Raumtempertur verläuft jedoch auch hier relativ langsam ; nach einem Tag zeigen die Filme noch keine ausreichende Chemikalienbeständigkeit und Härte. Ein ähnlicher Nachteil haftet dem gleichfalls auf der Michael-Addition beruhenden Bindemittelsystem der US-PS 4.408.018 an.

Ein alternatives Härtungsprinzip bedient sich der Kondensation von Silanolen, die sich während der Aushärtung von siliciumhaltigen Polymeren bilden, deren hydrolyseempflindlichen Gruppen am Siliciumatom mit der Luftfeuchtigkeit reagieren ; vgl. hierzu u.a. die EP-Offenlegungsschriften 50.249, 159.716 und 182.316. Nachteilig bei diesem System sind die relativ aufwendige Herstellung der silikonhaltigen Ausgangsverbindungen und die Abhängigkeit der Eigenschaften der Lackfilme von der relativen Luftfeuchtigkeit. Außerdem kann die Polykondensation unter dem Einfluß der Luftfeuchtigkeit bereits vor der Verarbeitung des Lackes einsetzen, was zur Hautbildung oder zu Ausfällungen im Lack führt.

Ähnliche Probleme zeigt auch das System gemäß der EP-Offenlegungsschrift 34 720, das auf einem Oxazolidingruppen enthaltenden Acrylatharz beruht, wobei gleichfalls Wasser oder Luftfeuchtigkeit als Härter benutzt werden.

In der DE-Offenlegungsschrift 3541140 wird schließlich ein Härtungsprodukt aus olefinisch ungesättigten Verbindungen als Bindemittel und wasserstoffaktiven Verbindungen mit Methantrimonoamidstruktur als Härter beschrieben. Ein Nachteil ist, daß zur Herstellung der Härter relativ große Mengen an gesundheitlich bedenklichen Polyisocyanaten benötigt werden. Außerdem sind die carbonsäureamidgruppenhaltigen Härter nicht in jedem Fall einwandfrei in den gebräuchlichen Lacklösemitteln löslich. Ein weiterer Nachteil ist die große Kratzempfindlichkeit der Filme, die wahrscheinlich darauf zurückzuführen ist, daß der Härter herstellungsbedingt noch größere Mengen von unumgesetztem Malonester enthält, der nicht mit den olefinisch ungesättigten Bindemitteln reagiert.

Es besteht daher das Bedürfnis nach einem isocyanatfreien, kalthärtenden System, das vorstehende Nachteile nicht besitzt und das zu Härtungsprodukten führt, die in ihren Eigenschaften den bekannten isocyanathaltigen Systemen vergleichbar gut sind.

Gegenstand der Erfindung ist daher eine Härtungskomponente (A) mit aktiven CH-Gruppen, dadurch gekennzeichnet, daß sie mindestens zwei Gruppen der Formel (I)

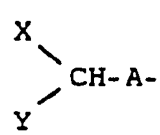

(I)

oder Struktureinheiten der Formel (I′) oder (I″)

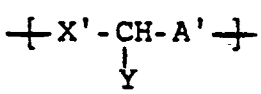

(I')

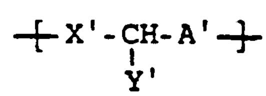

(I")

enthält, in der bedeuten :

$$A = \overset{O}{\overset{\|}{C}} \text{ oder } \overset{O}{\overset{\|}{C}}-O,$$

wobei letztere Gruppe über das C-Atom an die CH-Gruppe gebunden ist;

X, Y = gleich oder verschieden

$$R^1-\overset{O}{\overset{\|}{C}},$$

$CO_2R^1$, CN, $NO_2$, $CONH_2$, $CONR^1H$, $CONR^1R^1$, wobei die Reste $R^1$ gleich oder verschieden sein können und für einen Kohlenwasserstoffrest, vorzugsweise einen Alkylrest mit 1 bis 12, vorzugsweise 1 bis 6 C-Atomen stehen, der auch durch Sauerstoff oder einen N-Alkylrest unterbrochen sein kann, mit der Maßgabe, daß nur einer der beiden Reste X, Y die $NO_2$-Gruppe darstellen kann;

$$A' = \overset{O}{\overset{\|}{C}} \text{ oder } \overset{O}{\overset{\|}{C}}-O,$$

wobei letztere Gruppe über das C-Atom an die CH-Gruppe gebunden ist;

X', Y' = gleich oder verschieden

$$\overset{O}{\overset{\|}{C}}-O \text{ oder } \overset{O}{\overset{\|}{C}}-\overset{|}{N},$$

mit der Maßgabe, daß bei A' und X' gleich

$$\overset{O}{\overset{\|}{C}}-O$$

der Rest Y' vorzugsweise nicht gleich

$$\overset{O}{\overset{\|}{C}}-\overset{|}{N}$$

ist.

Weiterhin betrifft die Erfindung ein Verfahren zur Herstellung dieser Härtungskomponente (A), härtbare Mischungen, welche diese Härtungskomponente (A) enthalten, sowie die Verwendung dieser härtbaren Mischungen als Lackzubereitungen, insbesondere Autoreparaturlacke.

Die Zahl der Gruppen (I) in dem erfindungsgemäßen Härter beträgt vorzugsweise 2 bis 200 und insbesondere 2 bis 10, wobei sich die größeren Zahlenwerte auf oligomere oder polymere Produkte beziehen und hier Mittelwerte darstellen.

Vorzugsweise besitzt die erfindungsgemäße Härtungskomponente (A) die Formel (II)

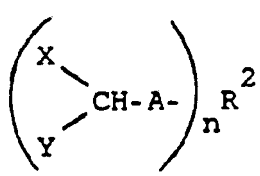

(II)

in der X, Y und A die obige Bedeutung haben, $R^2$ den Rest eines Polyols

$$R^2(OH)_n \quad (A = \overset{O}{\overset{\|}{C}}-O)$$

oder den Rest $R^2$ einer Polycarbonsäure

$$R^2 \quad (CO_2H)_n \quad (A = \overset{O}{\overset{\|}{C}})$$

darstellt und n mindestens zwei, vorzugsweise 2 bis 200, insbesondere 2 bis 10 bedeutet. Im Falle von oligomeren oder polymeren Härtungskomponenten handelt es sich bei diesen Zahlenangaben wiederum um Mittelwerte.

Weiterhin bevorzugt sind Härtungskomponenten, die man durch Umesterung von Verbindungen der Formel (III) oder der Formel (IV)

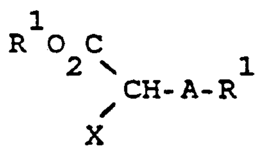 (III) 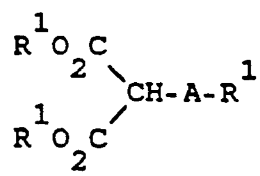 (IV)

mit Polyolen $R^2(OH)_n$ erhält, wobei X, A und $R^1$ die obige Bedeutung haben.

Bei den vorstehend genannten Polyolen $R^2(OH)_n$ kann es sich um einen mehrwertigen Alkohol handeln, der vorzugsweise 2 bis 12, insbesondere 2 bis 6 C-Atome enthält. Beispiele hierfür sind : Ethylenglykol, Propylenglykol-(1,2) und -(1,3), Butylenglykol-(1,4) und -(2,3), Di-β-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis-(4-hydroxycyclohexyl)-propan, 2,2-Bis-(4-(β-hydroxyethoxy)phenyl)-propan, 2-Methyl-1,3-propandiol, Glycerin, Trimethylolpropan, Hexantriol-(1,2,6), Butantriol-(1,2,4), Tris-(β-hydroxyethyl)-isocyanurat, Trimethylolethan, Pentaerythrit und deren Hydroxyalkylierungsprodukte, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z.B. ε-Caprolacton oder Hydroxycarbonsäuren, wie z.B. Hydroxypivalinsäure, ω-Hydroxydecansäure, ω-Hydroxycapronsäure, Thioglykolsäure erhalten werden, können eingesetzt werden. Der Index n in obiger Formel (II) steht im Falle derartiger mehrwertiger Alkohole vorzugsweise für 2 bis 4.

Alternativ kann das Polyol eine oligomere oder polymere Polyolverbindungen (Polyolharz) darstellen, deren Molekulargewicht $\overline{M}w$ (Gewichtsmittel, bestimmt mittels Gelchromatographie ; Polystyrolstandard), üblicherweise im Bereich von etwa 300 bis etwa 50000, vorzugsweise etwa 5000 bis etwa 20000 liegt. In Sonderfällen kann das Molekulargewicht jedoch 100000 und mehr betragen. Als Oligomere/Polymere kommen dabei Polymerisate, Polykondensate oder Polyadditionsverbindungen in Betracht. Die Hydroxylzahl beträgt im allgemeinen 30 bis 250, vorzugsweise 45 bis 200 und insbesondere 50 bis 180 mg KOH/g. Diese OH-gruppenhaltigen Verbindungen können gegebenenfalls noch andere funktionelle Gruppen enthalten, wie Carboxylgruppen.

Beispiele für derartige Polyole sind Polyetherpolyole, Polyacetalpolyole, Polyesteramidpolyole, Polyamidpolyole, Epoxidharzpolyole oder deren Umsetzungsprodukte mit $CO_2$, Phenolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polycarbonatpolyole, Polyesterpolyole oder Acrylatharzpolyole. Bevorzugt sind Polyetherpolyole, Polyesterpolyole, Acrylatharze und Polyurethanpolyole. Derartige Polyole, die auch in Mischung eingesetzt werden können, sind beispielsweise in der DE-Offenlegungsschrift 31 24 784 beschrieben.

Beispiele für Polyurethanpolyole ergeben sich aus der Umsetzung von Di- und Polyisocyanaten mit einem Überschuß an Di- und/oder Polyolen. Geeignete Isocyanate sind z.B. Hexamethylendiisocyanat, Isophorondiisocyanat, Toluyldiisocyanat als auch Isocyanate, gebildet aus drei Molen eines Diisocyanats wie Hexamethylendiisocyanat oder Isophorondiisocyanat, und Biurete, die aus der Reaktion von drei Molen eines Diisocyanates mit einem Mol Wasser hervorgehen. Geeignete Polyharnstoffpolyole können in ähnlicher Weise durch Umsetzung von Di- und Polyisocyanaten mit äquimolaren Mengen von Aminoalkoholen, z.B. Ethanolamin oder Diethanolamin, erhalten werden.

Beispiele für Polyesterpolyole sind die bekannten Polykondensate aus Di- oder Polycarbonsäuren oder deren Anhydriden, wie Phthalsäureanhydrid, Adipinsäure usw., und Polyolen wie Ethylenglykol, Trimethylolpropan, Glycerin usw.

Geeignete Polyamidpolyole können in ähnlicher Weise wie die Polyester erhalten werden, indem man die Polyole zumindest teilweise durch Polyamine, wie Isophorondiamin, Hexamethylendiamin, Diethylentriamin usw. ersetzt.

Beispiele für Polyacrylatpolyole oder OH-gruppenhaltige Polyvinylverbindungen sind die bekannten Copolymerisate aus hydroxylgruppenhaltigen (Meth)acrylsäureestern oder Vinylalkohol und anderen Vinylverbindungen, wie z.B. Styrol oder (Meth)acrylsäureestern.

Die obigen Polycarbonsäuren $R^2(CO_2H)_n$, wobein hier bevorzugt 2 bis 4 ist, können aliphatischer, cycloaliphatischer, aromatischer und/oder heterocyclischer Natur sein und gegebenenfalls, z.B. durch Halogenatome, substituiert und/oder gesättigt sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, Di- und Tetrachlorphthalsäure, Endomethylentetrahydrophthalsäure und ihr Hexachlorderivat, Glutarsäure, Maleinsäure, Fumarsäure, dimere und trimere Fettsäuren, wie Ölsäure, gegebenenfalls in Mischung mit monomeren Fettsäuren oder cyclischen Monocarbonsäuren, wie Benzoesäure, p-tert.-Butylbenzoesäure oder Hexahydrobenzoesäure. Weiterhin die Umsetzungsprodukte der obengenannten Polyole $R^2(OH)_n$ mit cyclischen Carbonsäureanhydriden.

Bei der erfindungsgemäßen Härtungskomponente (A) handelt es, je nach Art der Polyol- bzw. Polycarbonsäurekomponente, um mehr oder weniger viskose Flüssigkeiten oder um Feststoffe, die zumindest in den üblichen Lacklösemitteln weitgehend löslich sind und vorzugsweise weniger als 5 Gew.-%, insbesondere weniger als 1 Gew.-% an vernetzten Anteilen enthalten. Das CH-Äquivalentgewicht, das ein Maß für die Menge an Gruppen (I) bzw. Struktureinheiten (I')/(I'') in (A) ist, liegt im allgemeinen zwischen 100 und 5000, vorzugsweise 200 und 2000 und das mittlere Molekulargewicht $\overline{M}_w$ in der Regel zwischen 1000 und 100000, vorzugsweise zwischen 2000 und 50000 (gelchromatographisch bestimmt; Polystyrolstandard).

Es können auch Gemische der obigen Verbindungen als Härtungskomponente (A) eingesetzt werden.

Die Herstellung der erfindungsgemäßen Härtungskomponente (A) kann auf verschiedenen Wegen erfolgen. So kann man beispielsweise von Verbindungen (V)

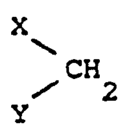

(V)

ausgehen, diese mit Chloriden ein- oder mehrwertiger Carbonsäuren acylieren oder mit Chlorameinsensäureestern ein- oder mehrwertiger Alkohole carboxylieren oder diese Verbindungen (V) nitrieren und die so erhaltenen Produkte gegebenenfalls mit Polyolen umestern oder mit Polyaminen umamidieren. Im Falle der Nitrierung muß mindestens einer der beiden Reste X/Y den Rest $—CO_2R^1$ bedeuten, und keiner dieser beiden Reste darf für eine $NO_2$-Gruppe stehen.

Beispiele für Verbindungen der Formel (V) sind: Malonsäuredialkylester von Alkoholen mit 1 bis 12, vorzugsweise 1 bis 10 C-Atomen, wie Malonsäuredimethyl-, Malonsäurediethyl-, Malonsäureediisopropyl-, Malonsäuredioctylester; die entsprechende Ester der Cyanessigsäure, wie z.B. Cyanessigsäureethylester oder Cyanessigsäurehexylester; die entsprechenden Ester der Acetessigsäure, wie Acetessigsäureethylester; Diketone wie Acetylaceton; Malondinitril oder Malonsäurediamide oder -monoamide.

Die Acylierung der Verbindungen (V) erfolgt in bekannter Weise mit Säurechloriden von Monocarbonsäuren mit 1-10, vorzugsweise 1 bis 6 C-Atomen, oder mit Säurechloriden von Polycarbonsäuren mit vorzugsweise 2 bis 10 C-Atomen. Beispiele für entsprechende Polycarbonsäuren sind weiter oben beschrieben.

Zur Carboxylierung werden die Verbindungen (V) mit Chlorameisensäureestern von ein- oder mehrwertigen Alkoholen der oben genannten Art umgesetzt, wie z.B. Chlorameisensäuremethylester, Chlorameisensäureethylester oder Hexandiol-1,6-bis-chlorformiat.

Zur Acylierung oder Carboxylierung wird die Verbindung (V) zunächst mit Alkali- und Erdalkalialkoholen, vorzugsweise Natrium-, Kalium- oder Magnesiumalkoholaten wie Methylaten oder Ethylaten umgesetzt und mit Säurechloriden $R^2(COCl)_m$ ($m = 1 - 200$) ein- oder mehrwertiger Carbonsäuren oder mit Chlorameisensäureester $R^2(OCOCl)_m$ ein- oder mehrwertiger Alkohole zur Reaktion gebracht. Diese Reaktion erfolgt zweckmäßigerweise in inerten Lösungsmitteln wie Ethern und aliphatischen oder aromatischen Kohlenwasserstoffen, vorzugsweise Diethylether, Tetrahydrofuran, Dioxan, Diethylenglykoldimethylether, Toluol oder Xylol bzw. entsprechenden Gemischen. Anstelle der obigen Alkoholate können weniger bevorzugt auch die freien Metalle mit (V) umgesetzt werden.

Die Nitrierung kann z.B. durch Reaktion der Verbindungen (V) mit rauchender Salpetersäure oder durch Oxidation der entsprechenden Nitrosoverbindungen nach literaturbekannten Verfahren erfolgen, beispielsweise bei Temperaturen von 10 bis 25°C mit oder ohne Lösungsmittel.

Die Umesterung der vorstehend erhaltenen Produkte mit Polyolen der weiter oben genannten Art ist erforderlich, um die Härtungskomponente polyfunktionell zu machen. Diese Umesterung, die beispielsweise bei der Acylierung Alkohole unterbleiben kann, wird zum Beispiel so durchgeführt, daß man die acylierten, carboxylierten oder nitrierten Verbindungen (V) mit den Polyolen, wie mehrwertigen Alkoholen, auf Temperaturen von 80 bis 200°C, vorzugsweise auf 100°C bis 160°C erhitzt, und den monofunktionellen Alkohol, gegebenenfalls unter vermindertem Druck, abdestilliert. Die Reaktion erfolgt üblicherweise ohne Katalysatoren. Zur Beschleunigung können jedoch die bekannten Veresterungskatalysatoren, wie Metallsalze organischer Säuren, z.B. Zinn-, Zink-, Blei-, Eisen-, Kupfer-, Chrom-, Cobalt-Acetat, -Octoat oder -Naphthenat sowie Dibutylzinnoxid in Mengen von 0,1 bis 1,0 Gew.-% zugesetzt werden. Besonders bevorzugt ist Dibutylzinndilaurat. Durch geeignete Wahl des Gewichtsverhältnisses der Reaktionspartner der Umesterung läßt sich die Bildung von vernetzten Estern der mehrwertigen Alkohole zugunsten der Bildung der gewünschten geradkettigen oder verzweigten Estern zurückdrängen. Außerdem können zu diesem Zweck und auch zur Begrenzung des Molekulargewichts dem Ansatz Kettenstopper, d.h. unter den Reaktionsbedingungen monofunktionell reagierende Verbindungen wie Monoalkohole, Monoamine oder Monoester, zugegeben werden, die vorzugsweise schwerflüchtig sind.

In gleicher Weise kann die Umamidierung mit Polyaminen oder Polyaminoalkoholen durchgeführt werden. Geeignete Polyamine sind z.B. Alkylendiamine, wie Ethylendiamin und seine Homologen oder Polyalkylenpolyamine wie Diethylentriamin, Triethylentetramin, oder cycloaliphatische Polyamine wie Piperazin, oder Polyoxyalkylenpolyamine. Geeignete Polyaminoalkohole sind z.B. Hydroxyethyldiethylentriamin oder Bishydroxyethyldiethylentriamin oder die Umsetzungsprodukte von cyclischen Carbonaten mit Polyaminen.

Eine andere Möglichkeit zur Herstellung der erfindungsgemäßen Härtungskomponente besteht darin, von Verbindungen der Formel (VI)

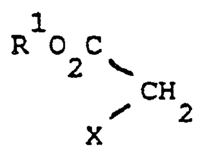

(VI)

auszugehen, in denen $R^1$ und X die obigen Bedeutungen haben, diese Verbindungen in der oben beschriebenen Art mit Polyolen umzuestern oder mit Polyaminen umzuamidieren und diese Umesterungsprodukte anschließend in der beschriebenen Weise mit Chloriden ein- und mehrwertiger Carbonsäuren zu acylieren, oder mit Chlorameisensäureestern ein- oder mehrwertiger Alkohole zu carboxylieren oder mit Salpetersäure nitrieren.

Bei der Umesterung bzw. Umamidierung der Verbindungen (VI) bzw. der acylierten, carboxylierten oder nitrierten Verbindungen (V) werden die Reaktionspartner normalerweise in solchen Mengen eingesetzt, daß mindestens eine Hydroxyl- oder Aminogruppe auf (VI) bzw. auf die acylierte, carboxylierte oder nitrierte Verbindung (V) kommt.

Die erfindungsgemäße Härtungskomponente (A) wird in härtbaren Mischungen zusammen mit Verbindungen (B) eingesetzt, die mindestens zwei zur Michael-Addition befähigte Gruppen enthalten, also Gruppen, die durch mindestens eine negativierende Gruppe aktivierte Doppelbindungen aufweisen (Michael-Acceptor). Geeignete Verbindungen (B) sind beispielsweise in der DE-Patentschrift 835 809, in der US-Patentschrift 4.408.018 sowie in den EP-Offenlegungsschriften 161 679 und 224 158 beschrieben, auf die hier Bezug genommen wird.

Vorzugsweise enthalten die Verbindungen (B) mindestens zwei Gruppen der Formel (VII)

$$R^3R^4C = CR^4\text{-}B\text{—} \quad (VII)$$

in der bedeuten :

$R^3$ = Wasserstoff oder ein Kohlenwasserstoffrest, vorzugsweise ein Alkylrest, mit 1 bis 12, vorzugsweise mit 1 bis 4 C-Atomen, wie die Methyl-, Ethyl-, n-Propyl-, Iso-Propyl-, n-Butyl- oder tert. Butylgruppe ;

$R^4$ = gleich oder verschieden und Wasserstoff, ein Kohlenwasserstoffrest, vorzugsweise Alkylrest, mit 1 bis 10, vorzugsweise 1 bis 4 C-Atomen, eine Estergruppe $CO_2R^1$, eine —CN—, —$NO_2$—, —$SO_2$—, —$CONHR^1$—, —$CONR^1R^1$ oder —$COR^1$-Gruppe, wobei $R^1$ die obige Bedeutung hat ;

$$B = \overset{\overset{O}{\|}}{C},\ \overset{\overset{O}{\|}}{C}\text{-}O,\ \overset{\overset{O}{\|}}{C}\text{-}\underset{|}{N},$$

wobei die beiden letzteren Gruppen über das C-Atom an die $CR^4$-Gruppe gebunden sind.

Bevorzugt stehen $R^3$ und $R^4$ in der obigen $R^3R^4C$-Gruppe jeweils für Wasserstoff.

Die obigen Gruppen (VII) sind indirekt miteinander verbunden. Als indirekte Verknüpfung kommt hier beispielsweise ein Kohlenwasserstoffrest, vorzugsweise jedoch der Rest eines mehrwertigen Alkohols $R^1(OH)_n$ oder eines mehrwertigen Amins bzw. Aminoalkohols in Frage. Diese indirekte Verknüpfung kann dabei auch ein Teil der Kette eines Oligomeren und/oder Polymeren sein, d.h. die Gruppen (VII) können in den Seitenketten des Oligomeren bzw. Polymeren vorhanden sein oder diese Seitenketten bilden.

Nach einer speziellen Ausführungsform besitzt die Verbindung (B) die Formel (VIII)

$$(R^3R^4C = CR^4\text{-}A\text{-})_mR^2 \quad \text{(VIII)}$$

in der $R^3$, $R^4$ und A die Bedeutung gemäß Formel (VII) haben, $R^2$ der Bedeutung in Formel (II) enspricht und m mindestens 2, vorzugsweise 2 bis 200 bedeutet.

Die Gruppe $R^3R^4C = CR^4\text{-}A—$ (VII) kann beispielsweise von einer ein- oder mehrfach ungesättigten Mono- oder Dicarbonsäure mit 2 bis 20, vorzugsweise 3 bis 10 C-Atomen abgeleitet sein.

Beispiele für solche Carbonsäuren sind Crotonsäure, Citraconsäure oder deren Anhydrid, Sorbinsäure, Fumarsäure, Mesaconsäure, substituierte und unsubstituierte Zimtsäuren, Dihydrolävulinsäure, Malonsäuremononitril, α-Cyanacrylsäure, Alkylidenmalonsäure, Alkylidenacetessigsäure, vorzugsweise Acrylsäure, Methacrylsäure und/oder Maleinsäure oder dessen Anhydrid. Die über die Gruppe A, aber auch über den Rest $R^4$ mögliche Anknüpfung des Michael-Acceptors an das Verbindungsglied, wie an einen polymeren Träger, kann über Ester-, Amid-, Urethan- oder Harnstoffgruppen erfolgen.

Entsprechend dem Vorstehenden können die Gruppen gemäß der Formel (VII) an den Rest eines Polyols, eines Polyamins, Polyamids oder Polyiminoamids gebunden sein, wobei dieser Rest auch oligomer oder polymer sein kann.

Als Polyole kommen hier grundsätzlich die gleichen in Frage, wie weiter oben im Zusammenhang mit dem Michael-Donator erwähnt, also mehrwertige Alkohole oder oligomere bzw. polymere Polyolverbindungen, z.B. Polyetherpolyole, Polyesterpolyole, Acrylatharzpolyole und Polyurethanpolyole.

Als Aminogruppen enthaltende Träger (Polyamine) kommen beispielsweise die oben erwähnten Alkylendiamine und deren Oligomere, wie Ethylendiamin, Propylendiamin, Butylendiamin, Diethylentriamin, Tetramine und höhere Homologe dieser Amine, ferner Aminoalkohole, wie Diethanolamin oder dergleichen in Betracht.

Als Beispiele für Verbindungen (B) seien hier genannt : Alkylglykoldi(meth)acrylate wie Ethylenglykoldiacrylate, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykolidiacrylat, 1,10-Decamethylenglykoldiacrylat, Trimethylolpropantriacrylat, Pentaerythrittetraacrylat, Pentaerythrittriacrylat und die entsprechenden Methacrylate.

Außerdem kann die Acryloxygruppe an Polymere gebunden sein, z.B. Kondensationspolymere, wie Polyester oder Polyadditionspolymere, wie Polyurethane, Polyether oder Vinylpolymerisate, wie Glycidyl(meth)acrylatcopolymere. Erwähnt seien hier beispielsweise Urethanacrylate, erhalten durch Umsetzung von Polyisocyanaten, wie Hexamethylendiisocyanat mit Hydroxyalkylacrylaten, wie Hydroxyethylacrylat oder durch Reaktion von hydroxylgruppenhaltigen Polyestern, Polyethern, Polyacrylaten mit Polyisocyanaten und Hydroxyalkylacrylaten, Urethanacrylate, erhalten durch Reaktion von Caprolactondiol oder -triol mit Polyisocyanaten und Hydroxyalkylacrylaten, Polyetheracrylate, erhalten durch Veresterung von Hydroxypolyethern mit Acrylsäure, Polyesteracrylate, erhalten durch Veresterung von Hydroxypolyestern mit Acrylsäure, Polyacrylate, erhalten durch Reaktion von Acrylsäure mit Vinylpolymerisaten mit Epoxidgruppen, z.B. Copolymerisate mit Glycidyl(meth)acrylat oder Vinylglycidylether.

Auch Gemische der obigen Verbindungen sind als Komponente (B) möglich.

Das C=C-Äquivalentgewicht der Komponente (B) liegt im allgemeinen zwischen 85 und 1800, vorzugsweise zwischen 180 und 1200 und das Molekulargewicht $\overline{Mw}$ in der Regel zwischen 170 und 50000, vorzugsweise 500 und 30000.

Das Mischungsverhältnis der beiden Komponenten (A) und (B) hängt von der Anzahl der verfügbaren C-H-aciden Kohlenwasserstoffatome der Härtungskomponente und der Anzahl der ungesättigten Gruppen der α,β-ungesättigten Verbindung ab. Da die reaktiven Gruppen titrimetrisch bestimmt werden können, können genau eingestellte stöchiometrische Mischungsverhältnisse herbeigeführt werden. Im allgemeinen beträgt das Äquivalent-Verhältnis der Donator : Acceptor-Gruppen 2 : 1 bis 1 : 2, insbesondere etwa (0,8-1,2) : 1 bis etwa

1 : (0,8-1,2). Auf diese Weise wird in der Regel eine ausreichende Vernetzungsdichte erreicht.

Um die Härtungsreaktion entsprechend zu beschleunigen, enthalten die erfindungsgemäßen härtbaren Mischungen die für die Michael-Addition bekannten Katalysatoren, insbesondere Lewis-Basen oder Brönstedt-Basen. Geeignete Katalysatoren finden sich beispielsweise in der EP-Offenlegungsschrift 224.158, auf die hier wiederum Bezug genommen wird.

Erwähnt seien hier als Katalysatoren beispielsweise sterisch gehinderte tertiäre Amine, wie etwa 1,4-Diazabicyclo- (2.2.2)-octan (DABCO), cyclische Amidine wie etwa 1,8-Diazabicyclo- (5.4.0)-undec-7-en (DBU), 1,4-Diazabicyclo- (4.3.0)-non-5-en (DBN) u.a., Guanidine wie z.B. das N,N,N,N-Tetramethylguanidin, quartäre Ammoniumsalze wie Alkyl-, Aryl- und/oder Benzylammoniumfluoride, gegebenenfalls in Kombination mit Tetraalkoxysilanen ; als Beispiele für derartige quartäre Ammoniumsalze seien hier genannt : Benzyltrimethylammoniumfluoride und Tetrabutylammoniumfluorid ; weiterhin können die entsprechenden Hydroxide und Carbonate der quartären Ammoniumsalze wie z.B. Alkyl-benzyldimethylammoniumhydroxid, Alkyl-trimethylammoniumhydroxid (Alkyl = $C_{16}$-$C_{22}$), Benzyltrimethylammoniumhydroxid und Tetrabutylammoniumhydroxid verwendet werden.

Die genannten Ammoniumsalze können für sich oder in Mischung als auch in Kombination mit tertiären aliphatischen Aminen wie etwa Triethylamin, N-Methyldiethanolamin usw. verwendet werden. Weitere Beispiele sind hier starke Basen aus der Gruppe der Metallalkoholate wie z.B. Lithiumbutylat, Natrium- und Kaliummethylat, die mit oder ohne Kronenether eingesetzt werden können.

Eine weitere wichtige Gruppe von Katalysatoren stellen tertiäre Phosphane dar, wie z.B. Tris-2-cyanoethylphosphan, Trisdiethylaminomethylphosphan, Trisdimethylaminomethylphosphan und Trishydroxymethylphosphan, oder Trisphenylphosphan, Tris-p-tolylphosphan, Tris-o-anilylphosphan, Phenyl-di-o-anisylphosphan, Diphenyl-p-anisylphosphan, Diphenyl-o-anisylphosphan, Diphenyl-p-dimethylaminophenylphosphan, Methyldiphenylphosphan, Methyldi-tolylphosphan, Ethyl-di-p-anisylphosphan, (Diethylaminomethyl)-di-phenylphosphan, oder α,α-Dimethylbenzyliminotris-(dimethylamino-)-phosphoran, α,α-Dimethylbenzyliminomethyldiphenylphosphoran, t-Butylimino-triphenylphosphoran, vorzugsweise α,α-Dimethylbenzylimino-tri-butyl-phosphoran.

Die Menge des Katalysators beträgt im allgemeinen 0,01-5 Gew.-%, vorzugsweise 0,02-3 Gew.-%, bezogen auf Gesamtfeststoffgehalt des Ausgangsproduktes. Sie kann je nach Reaktivität der Härtungskomponenten und der angestrebten Topfzeit und Härtungsdauer bzw. -temperatur variiert werden.

Die erfindungsgemäßen härtbaren Mischungen zeigen Topfzeiten, die je nach Auswahl der Verbindung (A) und (B) sowie nach Art und Menge des Katalysators bzw. der Katalysatorkombination zwischen 5 min. und etwa 12 Stunden schwanken. Dadurch ist eine hohe Verarbeitungssicherheit gewährleistet.

Die erfindungsgemäße härtbare Mischung kann gegebenenfalls ein Verdünnungsmittel, wie übliche, die Michael-Addition nicht störende Lösungsmittel enthalten. Dadurch kann evtl. der Katalysator besser verteilt oder dessen Aktivität gesteigert werden. Beispielsweise seien hier genannt : halogenierte Kohlenwasserstoffe, Ether, wie Diethylether, 1,2-Dimethoxyethan, Tetrahydrofuran oder Dioxan ; Ketone, wie beispielsweise Methylethylketon, Aceton, Cyclohexanon und ähnliche ; Alkohole, wie Methanol, Äthanol, Propanol, Butanol und Benzylalkohol, (cyclo)aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180°C (Höhersiedende Mineralölfraktionen, wie ®Solvesso). Die Lösemittel können dabei einzeln oder im Gemisch eingesetzt werden.

Weiterhin können in der erfindungsgemäßen härtbaren Mischung auch übliche Zusatzstoffe vorhanden sein, wie beispielsweise die üblichen Lackadditive. Als solche seien hier genannt : Pigmente (Eisenoxide, Bleioxide, Bleisilikate, Titandioxid, Bariumsulfat, Zinkoxid, Zinksulfid, Phthalocyaninkomplexe etc.), Pigmentpasten, Antioxidantien, (UV-)Stabilisatoren, Verlauf- bzw. Verdickungsmittel, Entschäumer und/oder Netzmittel, Reaktivverdünner, Füllstoffe (Talkum, Glimmer, Kaolin, Kreide, Quarzmehl, Asbestmehl, Schiefermehl, verschiedene Kieselsäuren, Silikate etc.), zusätzliche Härter und zusätzliche härtbare Verbindungen, udgl. Diese Additive können der Mischung gegebenenfalls erst unmittelbar vor der Verarbeitung zugegeben werden.

Zur Herstellung der erfindungsgemäßen härtbaren Mischungen werden die Komponenten (A) und (B) sowie gegebenenfalls zusätzlich das Verdünnungsmittel und die Zusatzstoffe miteinander gemischt. Bei Komponenten mit niedriger Viskosität kann dies in Substanz erfolgen, wobei gegebenenfalls auf höhere Temperaturen erwärmt wird. Produkte höherer Viskosität werden — falls die härtbaren Mischungen nicht als Pulverlacke eingesetzt werden — vor der Mischung in den erwähnten Verdünnungsmitteln gelöst oder dispergiert.

Die Härtung der erfindungsgemäßen Mischungen läuft sehr rasch ab und erfolgt im allgemeinen bie −10 bis 100°C, vorzugsweise 0 bis 80°C. Zum Beispiel erhält man bei Raumtemperatur nach 8 bis 24 Stunden oder bei 60°C nach 0,5 bis 1 Stunde bereits Produkte mit guter Härte.

Die Härtungsreaktion läßt sich in einer Stufe durchführen, indem man beispielsweise mit äquivalenten Anteilen der Komponenten (A) und (B) arbeitet. Die Topfzeit und die Eigenschaften des Produkts hängen dabei

von den Verfahrensbedingungen, d.h. von der Art und der Menge der Ausgansstoffe, Dosierung des Katalysators, der Temperaturführung etc. ab. So läßt sich die Elastizität des vernetzten Produktes innerhalb eines Toleranzbereiches z.B. durch die Kettenlänge der für (A) und (B) eingesetzten Oligomeren und/oder Polymeren steuern. Obwohl die Härtung in der Regel diskontinuierlich betrieben wird, liegt es auch im Rahmen der Erfindung, das Vermischen der Komponenten und den Reaktionsverlauf kontinuierlich durchzuführen, beispielsweise mittels einer automatischen Lackiervorrichtung.

Die erfindungsgemäßen Mischungen können wegen ihrer günstigen Eigenschaften — vor allem der raschen Aushärtung auch bei tiefen Temperaturen und auch bei hoher Luftfeuchtigkeit sowie der hohen Pendelhärte, dem hohen Glanz und der guten Chemikalienbeständigkeit der Überzüge — eine vielseitige technische Anwendung finden, z.B. zur Herstellung von Formkörpern (Gießharze) für den Werkzeugbau oder zur Herstellung von Überzügen und/oder Zwischenbeschichtungen auf vielerlei Substraten, z.B. auf solchen organischer oder anorganischer Natur, wie Holz, Holzfaserstoffe (Holzversiegelung), Textilien natürlicher oder synthetischer Herkunft, Kunststoffe, Glas, Keramik, Baustoffe, wie Beton, Faserplatten, Kunststeine, insbesondere jedoch auf Metall. Weiterhin können die erfindungsgemäßen Mischungen als Bestandteile von Klebern, Kitten, Laminierharzen, Kunstharzzementen und insbesondere als Bestandteile von Anstrichmitteln und Lacken zum Beschichten von Industriegegenständen, Haushaltsgeräten, Möbeln sowie im Bauwesen, wie z.B. Kühlgeräten, Waschmaschinen, Elektrogeräten, Fenstern, Türen, eingesetzt werden. Das Aufbringen kann in bekannter Weise, wie Streichen, Sprühen, Tauchen oder elektrostatisch erfolgen.

Ein bevorzugtes Anwendungsgebiet für die erfindungsgemäßen Mischungen liegt in der Herstellung von Kraftfahrzeuglacken (Grund- und/oder Decklacke) und insbesondere von Autoreparaturlacken. Hierbei ist die Xylolbeständigkeit und damit gleichzeitig eine gute Beständigkeit gegenüber Superbenzin wichtig ; weiterhin soll im Falle von Autoreparaturlacken auch eine gute Härtung bei Raumtemperatur gegeben und die Freisetzung von umweltbelastenden Stoffen nur gering sein. Diese Voraussetzungen sind vorliegend weitgehend erfüllt.

In den nachstehenden Beispielen bedeuten % jeweils Gew.-% und T jeweils Gew.-Teile.

**Beispiele**

A Herstellung der Härtungskomponenten (A) (Michael-Donator)

1) 858,4 T Methantricarbonsäuretriethylester und 436,6 T Hexandiol-1,6 wurden gemischt und unter Stickstoff auf 140°C erhitzt. Bei dieser Temperatur wurde zunächst unter Normaldruck Ethanol und anschließend im Vakuum ein Gemisch aus Ethanol und Methantricarbonsäuretriethylester abdestilliert. Insgesamt wurden 362 g abdestilliert. Als Rückstand verblieben 933 g einer farblosen viskosen Flüssigkeit mit einem mittleren Molekulargewicht $\overline{M}_w$ ; Polystyrolstandard) von 70000 und einem Äquivalentgewicht von 304 g/mol.

2) Analog zum Beispiel 1) wurden 806,5 g Methantricarbonsäurediethylmonomethylester und 340,9 g Butandiol-1,4 umgesetzt. Nach dem Abdestillieren von 259 g flüchtigen Bestandteilen verblieben 889 g einer schwach gelb gefärbten viskosen Flüssigkeit mit einem mittleren Molekulargewicht von 20000 und einem Äquivalentgewicht von 427 g/mol.

3) Analog zum Beispiel 1) wurden 858 g Methantricarbonsäuretriethylester und 440 g Trimethylolpropan bei 140°C umgesetzt. 600 g flüchtige Bestandteile wurden insgesamt abdestilliert. Man erhielt eine farblose viskose Flüssigkeit mit einem mittleren Molekulargewicht von 4300 und einem Äquivalentgewicht von 295 g/mol.

4) Analog zum Beispiel 1) wurden 404 g Acylmalonsäurediethylester und 231 g Hexandiol-1,6 umgesetzt. Nach dem Abdestillieren von 101 g flüchtigen Bestandteilen verblieben 534 g einer farblosen leicht viskosen Flüssigkeit mit einem mittleren Molekulargewicht von 1700 und einem Äquivalentgewicht von 268 g/mol.

5) Analog Beispiel 1) wurden 404 g Acylmalonsäurediethylester und 80 g Trimethylolpropan umgesetzt. 158 g flüchtige Bestandteile wurden insgesamt abdestilliert. Als Rückstand verblieben 326 g einer farblosen leicht viskosen Flüssigkeit mit einem mittleren Molekulargewicht von 3200 und einem Äquivalentgewicht von 209 g/mol.

6) Analog zum Beispiel 1) wurden 103,31 g Diacetylessigsäuremethylester und 26,84 g Trimethylolpropan bei 106°C umgesetzt. Nach dem Abdestillieren von 60,2 g flüchtigen Anteilen verblieben 76,2 g einer leicht gelb gefärbten viskosen Flüssigkeit mit einem Äquivalentgewicht von 235.

7) 25,04 T Magnesiumspäne, 25 ml trockenes Ethanol und 1 ml Tetrachlorkohlenstoff wurden in einem 2 l-Vierhalskolben mit Rührer, Rückflußkühler und Tropftrichter vorgelegt und durch vorsichtiges Erwärmen die Salzbildung gestartet. Es wurden 160,17 T Malonsäurediethylester, gelöst in 80 ml Ethanol, so eingetropft, daß die Reaktion nicht zu heftig wurde. Während der Reaktionszeit wurden insgesamt 300 ml trockener Diethylether in Portionen zugegegeben. Die Reaktionsmischung wurde, nachdem sämtliches Malonat zugetropft worden war, 2 h unter Rückfluß gehalten, bis die Magnesiumspäne weitgehend gelöst waren. 127 T 1,6-Hexandiol-bis-chlorformiat, gelöst in 100 ml Ether, wurden danach innerhalb von 2 h zugetropft und über Nacht bei Raumtemperatur stehen gelassen. Der Ansatz wurde mit 60 ml Essigsäure, gelöst in 300 ml Wasser, hydrolisiert, die organische Phase mit Wasser neutral gewaschen, über Natriumsulfat getrocknet, die organischen Lösungsmittel am Rotationsverdampfer entfernt und der klare, ölige Rückstand durch plötzliches Abkühlen und Anreiben kristallisiert. Es wurden 97,3 T des Hexandiol-1,6-bis-methantricarbonsäurediethylesters als kristalliner Feststoff vom Schmelzpunkt 42°C erhalten. Die Säurezahl betrug 230.

8) 287,2 T Nitromalonsäurediethylester und 247,9 T Trimethylolpropan wurden unter Stickstoff bei Raumtemperatur gemischt, langsam auf maximal 140°C erhitzt, wobei Ethanol abzudestillieren begann. Nach 5 h wurden flüchtige Bestandteile im Wasserstrahlvakuum bei einer Temperatur von 140°C entfernt und insgesamt 37,4 g eines viskosen, gelben Öls mit einem Äquivalentgewicht von 441 g gewonnen ; das mittlere Molekulargewicht betrug 1646.

9) 360 T Malonsäurediethylester und 50,25 T Trimethylolpropan wurden unter Stickstoff gemischt, auf 160°C erhitzt und innerhalb von 5 h 39 T Ethanol abdestilliert, anschließend bei 120°C sämtliche flüchtige Bestandteile im Wasserstrahlvakuum entfernt, wobei 179 T eines farblosen Öls gewonnen wurden, dessen mittleres Molekulargewicht 3600 betrug. 100 T des erhaltenen Reaktionsproduktes, gelöst in 40 T trockenem Ethanol, wurden zu 12,52 T Magnesiumspänen, 12,5 ml trockenem Ethanol und 0,5 ml Tetrachlorkohlenstoff innerhalb von 2 h getropft und anschließend weitere 3 Stunden unter Rückfluß gehalten, bis sich die Magnesiumspäne weitgehend aufgelöst hatten. Anschließend wurden 52 g Chlorameisensäureethylester, gelöst in 150 ml Ether, innerhalb von 2 h zugetropft und 2 Tage bei Raumtemperatur reagieren lassen. Nach Hydrolisierung mit Wasser und Essigsäure (5 : 1) bis zur schwach sauren Reaktion wurde die organische Phase abgetrennt, über $Na_2SO_4$ getrocknet und flüchtige Bestandteile im Wasserstrahlvakuum entfernt. Es wurden 202,5 g eines carboxethylierten Produkts mit einem Äquivalentgewicht von 708 g erhalten.

10) 2090,1 g Methantricarbonsäuretriethylester, 709,7 g Butandiol-1,4 und 450,0 g eines Polycaprolactondiols mit einem Molekulargewicht von 400 g/mol wurden gemischt und unter Stickstoff 7 Stunden auf 125-135°C erhitzt. Es wurden insgesamt 697,5 g Ethanol abdestilliert. Als Rückstand verlieben 2552,3 g einer farblosen viskosen Flüssigkeit mit einem Äquivalentgewicht von 300 g/mol und einem mittleren Molekulargewicht ($\overline{M}_w$ ; Polystyrolstandard) von 8.300 g/mol.

11) 85,9 g Methantricarbonsäuretriethylester wurden mit 95,85 g eines Polyetherpolyols (®Pluracol TP 440, BASF) unter Stickstoff 2 Stunden auf 135-140°C erhitzt. Dabei destillierten insgesamt 19,34 g Ethanol ab. Es verblieben 162,41 g einer farblosen, hochviskosen Flüssigkeit mit einem Äquivalentgewicht von 446 g/mol und einem mittleren Molekulargewicht ($\overline{M}_w$ ; Polystyrolstandard) von 7.400 g/mol.

B Herstellung der Komponente (B) (Michael-Acceptor)

1000 T eines glycidylgruppenhaltigen Acrylatharzes, hergestellt aus Styrol, Glycidylmethacrylat und Dimethylmaleinat (Epoxidäquivalentgewicht 510) wurden in 680 T Xylol bei 70°C gelöst und anschließend 127 T Acrylsäure und 1 T Tetraethylammoniumbromid zugesetzt. Unter Durchleiten von Luft wurde bei 80°C bis zu einer Säurezahl < 1 nachgerührt. Die hellgelbe Lösung hatte einen Festkörpergehalt von 62,5% ; C=C-Äquivalentgewicht : 1022.

C Herstellung der härtbaren Mischung/Beschichtungen

Die in der folgenden Tabelle angegebenen Gewichtsmengen der Komponente (A) und (B) und des Katalysators wurden gemischt. Nachdem mit Butylacetat eine Auslaufzeit von 25 s nach 4 DIN 53211/23°C eingestellt worden war, wurde das erhaltene Beschichtungsmaterial mittels eines Aufziehrakels in einer Naßfilmstärke von 100 µm auf Glasplatten aufgebracht und 30 min bei 60°C gehärtet.

| Bsp. | Komponente (A) Typ | Komponente (A) Menge (g) | Komponente (B) Menge (g) | Katalysator Typ | Katalysator Menge (g) | Gelzeit (h) | Pendelhärte (s) n. 1 Tag | Pendelhärte (s) 7 Tagen | Benzinbeständigkeit (min.) nach 7 Tagen |
|---|---|---|---|---|---|---|---|---|---|
| 1 | A 1 | 25,0 | 50,0 | TBAF | 1,30 | 5 | 80 | 130 | 30 |
| 1a* | A 1 | 25,0 | 50,0 | TBAF | 1,30 | 5 | 70 | 199 | 30 |
| 2 | A 2 | 35,8 | 50,0 | TBAF | 1,50 | 8 | 35 | 63 | 30 |
| 2a | A 2 | 35,8 | 50,0 | TMG | 0,24 | 1 | 22 | 29 | 15 |
| 3 | A 3 | 25,0 | 50,0 | TBAF | 1,30 | 16 | 48 | 155 | 30 |
| 3a* | A 3 | 25,0 | 50,0 | TBAF | 1,30 | 16 | 36 | 122 | 15 |
| 3b | A 3 | 25,0 | 50,0 | TMG | 0,22 | 3 | 95 | 103 | 15 |
| 4 | A 4 | 22,5 | 50,0 | TBAF | 2,40 | 24 | 30 | 52 | 10 |
| 5 | A 5 | 17,6 | 50,0 | TBAF | 2,20 | 24 | 61 | 97 | 15 |
| 6 | A 6 | 18,7 | 50,0 | TBAF | 2,28 | 24 | 18 | 46 | 15 |
| 7 | A 7 | 20,8 | 50,0 | TBAF | 2,40 | 24 | 14 | 77 | 5 |
| 8 | A 8 | 36,7 | 50,0 | TMG | 2,06 | 24 | 37 | 85 | 5 |
| 9 | A 9 | 59,1 | 50,0 | TBAF | 4,00 | 24 | 22 | 64 | 5 |
| 10* | A 10 | 29,5 | 50,0 | TPP | 0,54 | 4 | 63 | 113 | 30 |
| 11* | A 11 | 56,4 | 50,0 | TPP | 0,75 | 10 | 19 | 67 | 15 |

* = Trocknung bei Raumtemperatur

TBAF = Tetrabutylammoniumfluorid

TMG = Tetramethylguanidin

TPP = Triphenylphosphin

## Patentansprüche

### Patentansprüche für folgende Vertragsstaaten : AT, BE, CH, DE, FR, GB, GR, IT, LI, LU, NL, SE

1. Härtungskomponente (A) mit aktiven CH-Gruppen, dadurch gekennzeichnet, daß sie mindestens zwei Gruppen der Formel (I)

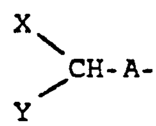 (I)

oder Struktureinheiten der Formel (I′) oder (I″)

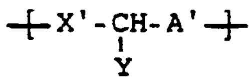 (I′) 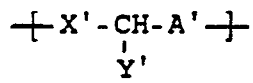 (I″)

enthält, in der bedeuten :

A = 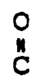 oder 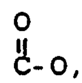

wobei die letztere Gruppe über das C-Atom an die CH-Gruppe gebunden ist;
X, Y = gleich oder verschieden

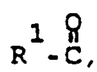

$CO_2R^1$, CN, $NO_2$, $CONH_2$, $CONR^1H$, $CONR^1R^1$, wobei die Reste $R^1$ gleich oder verschieden sein können und für einen Kohlenwasserstoffrest, vorzugsweise einen Alkylrest mit 1 bis 12 C-Atomen stehen, der auch durch Sauerstoff oder einen N-Alkylrest unterbrochen sein kann, mit der Maßgabe, daß nur einer der beiden Reste X, Y die $NO_2$-Gruppe darstellen kann;

A′= 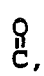 oder 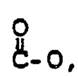

wobei die letztere Gruppe über das C-Atom an die CH-Gruppe gebunden ist;
X′, Y′ = gleich oder verschieden

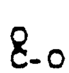 oder 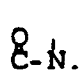

2. Härtungskomponente nach Anspruch 1, dadurch gekennzeichnet, daß sie die Formel (II)

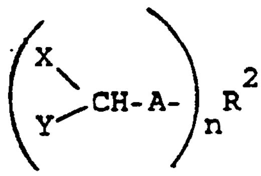 (II)

besitzt, in der X, Y und A die obige Bedeutung haben, $R^2$ den Rest eines Polyols

$$R^2(OH)_n \; (A = \overset{O}{\overset{\|}{C}}\text{-}O)$$

oder einer Polycarbonsäure

$$R^2(CO_2H)_n \; (A = \overset{O}{\overset{\|}{C}})$$

darstellt und n mindestens zwei bedeutet.

3. Härtungskomponente nach Anspruch 2, dadurch gekennzeichnet, daß $R^2$ den Rest eines Polyols mit 2 bis 12 C-Atomen bedeutet und n für 2 bis 4 steht.

4. Härtungskomponente nach Anspruch 2, dadurch gekennzeichnet, daß $R^2$ den Rest eines Polyolharzes $R^2(OH)_n$ bedeutet, in dem n 2 bis 200 ist.

5. Härtungskomponente nach Anspruch 2, dadurch gekennzeichnet, daß $R^2$ den Rest einer Polycarbonsäure $R^2(CO_2H)_n$ darstellt, in der n 2 bis 4 ist.

6. Verfahren zur Herstellung der Härtungskomponente nach mindestens einem der Ansprüche 1 bis 5, dadurch gekennzeichnet, daß man Verbindungen der Formel (V)

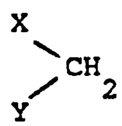 (V)

in der X, Y die obige Bedeutung haben, acyliert, carboxyliert oder nitriert, mit der Maßgabe, daß im Falle der Nitrierung mindestens einer der beiden Reste X/Y den Rest $-CO_2R^1$ bedeuten muß und keiner für $NO_2$ steht, und anschließend die so erhalten Produkte gegebenenfalls mit Polyolen umestert oder mit Polyaminen umamidiert.

7. Verfahren zur Herstellung der Härtungskomponente nach mindestens einem der Ansprüche 1 bis 5, dadurch gekennzeichnet, daß man Verbindungen der Formel (VI)

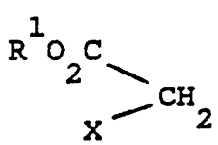 (VI)

in der $R^1$ und X die obige Bedeutung haben, mit Polyolen umestert oder mit Polyaminen umamidiert und die so erhaltenen Umesterungsprodukte anschließend acyliert, carboxyliert oder nitriert.

8. Verfahren nach Anspruch 6 oder 7, dadurch gekennzeichnet, daß die Acylierung mit Chloriden ein- oder mehrwertiger Carbonsäuren und die Carboxylierung mit Chlorameisensäureestern ein- oder mehrwertiger Alkohole erfolgt.

9. Verfahren nach mindestens einem der Ansprüche 6 bis 8, dadurch gekennzeichnet, daß als Verbindungen (V) oder (VI) Malonsäuredialkylester, Acetessigsäurealkylester, Cyanessigsäurealkylester oder β-Diketone eingesetzt werden.

10. Verfahren nach mindestens einem der Ansprüche 6 bis 9, dadurch gekennzeichnet, daß die Umesterung mit mehrwertigen Alkoholen mit 2 bis 12 C-Atomen erfolgt.

11. Härtbare Mischungen, welche die Härtungskomponente (A) gemäß mindestens einem der Ansprüche 1 bis 5 zusammen mit einer Verbindung (B) enthalten, die mindestens zwei zur Michael-Addition befähigte Gruppen aufweist.

12. Härtbare Mischungen nach Anspruch 11, dadurch gekennzeichnet, daß die Verbindung (B) mindestens zwei Gruppen der Formel (VII)

$$R^3R^4C = CR^4\text{-}B\text{—} \quad (VII)$$

enthält, in der bedeuten :

$R^3$ = Wasserstoff oder ein Kohlenwasserstoffrest, vorzugsweise ein Alkylrest, mit 1 bis 12, vorzugsweise mit 1 bis 4 C-Atomen ;

$R^4$ = gleich oder verschieden und Wasserstoff, ein Kohlenwasserstoffrest, vorzugsweise Alkylrest, mit 1 bis 10, vorzugsweise 1 bis 4 C-Atomen, eine Estergruppe —$CO_2R^1$, eine —CN—, —$NO_2$—, —$SO_2$—, —$CONHR^1$—, —$CONR^1R^1$ oder —$COR^1$-Gruppe, wobei $R^1$ die obige Bedeutung hat ;

B = 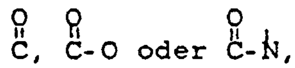 oder

wobei die beiden letzteren Gruppen über das C-Atom an die $CR^4$-Gruppe gebunden sind.

13. Härtbare Mischungen nach Anspruch 11 und/oder 12, dadurch gekennzeichnet, daß die zur Michael-Addition befähigten Gruppen von einer ungesättigten, höchstens zweibasischen Carbonsäure mit 2 bis 10 C-Atomen abgeleitet sind und diese Gruppen an den Rest eines Polyols oder Polyamins gebunden sind.

14. Härtbare Mischungen nach Anspruch 13, dadurch gekennzeichnet, daß das Polyol oligomer oder polymer ist und eine OH-gruppenhaltige Verbindung aus der Gruppe Polyester, Epoxidharz, Acrylatharz oder Polyurethan darstellt.

15. Härtbare Mischungen nach mindestens einem der Ansprüche 11 bis 14, dadurch gekennzeichnet, daß das Äquivalent-Verhältnis von (A) zu (B) 2 : 1 bis 1 : 2 beträgt.

16. Härtbare Mischungen nach mindestens einem der Ansprüche 11 bis 14, dadurch gekennzeichnet, daß sie zusätzlich Katalysatoren aus der Gruppe der Amide, Guanidine, Amidine, Phosphane, quartären Ammoniumfluoride oder -hydroxide sowie Alkalialkoholate enthalten.

17. Verwendung der härtbaren Mischungen gemäß mindestens einem der Ansprüche 11 bis 16 in Lackzubereitungen, insbesondere Autoreparaturlacken.

**Patentansprüche für folgenden Vertragsstaat : ES**

1. Verfahren zur Herstellung einer Härtungskomponente (A) mit aktiven CH-Gruppen, die mindestens zwei Gruppen der Formel (I)

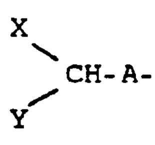 (I)

oder Struktureinheiten der Formel (I') oder (I")

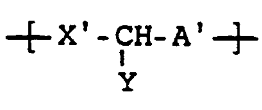 (I')

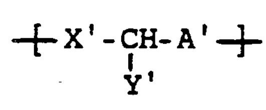 (I")

enthält, in der bedeuten

A = 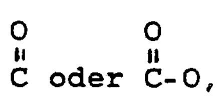 oder

wobei die letztere Gruppe über das C-Atom an die CH-Gruppe gebunden ist;

X, Y = gleich oder verschieden

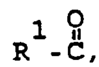

$CO_2R^1$, CN, $NO_2$, $CONH_2$, $CONR^1H$, $CONR^1R^1$, wobei die Reste $R^1$ gleich oder verschieden sein können und für einen Kohlenwasserstoffrest, vorzugsweise einen Alkylrest mit 1 bis 12 C-Atomen stehen, der auch durch Sauerstoff oder einen N-Alkylrest unterbrochen sein kann, mit der Maßgabe, daß nur einer der beiden Reste X, Y die $NO_2$-Gruppe darstellen kann;

A' = 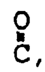 oder 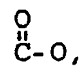

wobei die letztere Gruppe über das C-Atom an die CH-Gruppe gebunden ist;

X', Y' = gleich oder verschieden

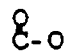 oder 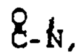

dadurch gekennzeichnet, daß man Verbindungen der Formel (V)

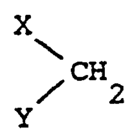 (V)

in der X und Y die obige Bedeutung haben, acyliert, carboxyliert oder nitriert, mit der Maßgabe, daß im Falle der Nitrierung mindestens einer der beiden Reste X/Y den Rest —$CO_2R^1$ bedeuten muß und keiner für $NO_2$ steht, und anschließend die so erhaltenen Produkte gegebenenfalls mit Polyolen umestert oder mit Polyaminen umamidiert.

2. Verfahren zur Herstellung der Härtungskomponente nach Anspruch 1, dadurch gekennzeichnet, daß man Verbindungen der Formel (VI)

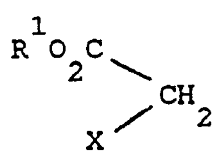 (VI)

in der $R^1$ und X die obige Bedeutung haben, mit Polyolen umestert oder mit Polyaminen umamidiert und die so erhaltenen Umesterungsprodukte anschließend acyliert, carboxyliert oder nitriert.

3. Verfahren nach Anspruch 1 oder 2, dadurch gekennzeichnet, daß die Acylierung mit Chloriden ein- oder mehrwertiger Carbonsäuren und die Carboxylierung mit Chlorameisensäureestern ein- oder mehrwertiger Alkohole erfolgt.

4. Verfahren nach mindestens einem der Ansprüche 1 bis 3, dadurch gekennzeichnet, daß als Verbindungen (V) oder (VI) Malonsäuredialkylester, Acetessigsäurealkylester, Cyanessigsäurealkylester oder β-Diketone eingesetzt werden.

5. Verfahren nach mindestens einem der Ansprüche 1 bis 4, dadurch gekennzeichnet, daß die Umesterung mit mehrwertigen Alkoholen mit 2 bis 12 C-Atomen erfolgt.

6. Verfahren nach mindestens einem der Ansprüch 1 bis 5, dadurch gekennzeichnet, daß die Härtungskomponente (A) die Formel (II)

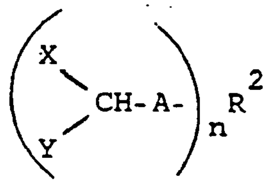

(II)

besitzt, in der X, Y und A die obige Bedeutung haben, $R^2$ den Rest eines Polyols

$$R^2(OH)_n \quad (A = \overset{O}{\overset{\|}{C}}\text{-}O)$$

oder einer Polycarbonsäure

$$R^2(CO_2H)_n \quad (A = \overset{O}{\overset{\|}{C}})$$

darstellt und n mindestens zwei bedeutet.

7. Verfahren nach Anspruch 6, dadurch gekennzeichnet, daß $R^2$ den Rest eines Polyols mit 2 bis 12 C-Atomen bedeutet und n für 2 bis 4 steht, oder den Rest eines Polyolharzes $R^2(OH)_n$ bedeutet, in dem n 2 bis 200 ist, den Rest einer Polycarbonsäure $R^2(CO_2H)_n$ darstellt, in der n 2 bis 4 ist.

8. Härtbare Mischungen, welche die Härtungskomponente (A) gemäß mindestens einem der Ansprüche 1 bis 7 zusammen mit einer Verbindung (B) enthalten, die mindestens zwei zur Michael-Addition befähigte Gruppen aufweist.

9. Härtbare Mischungen nach Anspruch 8, dadurch gekennzeichnet, daß die Verbindung (B) mindestens zwei Gruppen der Formel (V)

$$R^3R^4C = CR^4\text{-}B\text{—} \quad \text{(VII)}$$

enthält, in der bedeuten :

$R^3$ = Wasserstoff oder ein Kohlenwasserstoffrest, vorzugsweise ein Alkylrest, mit 1 bis 12, vorzugsweise mit 1 bis 4 C-Atomen ;

$R^4$ = gleich oder verschieden und Wasserstoff, ein Kohlenwasserstoffrest, vorzugsweise Alkylrest, mit 1 bis 10, vorzugsweise 1 bis 4 C-Atomen, eine Estergruppe —$CO_2R^1$, eine —CN—, —$NO_2$—, —$SO_2$—, —$CONHR^1$—, —$CONR^1R^1$ oder —$COR^1$-Gruppe, wobei $R^1$ die obige Bedeutung hat ;

$$B = \overset{O}{\overset{\|}{C}},\ \overset{O}{\overset{\|}{C}}\text{-}O \text{ oder } \overset{O}{\overset{\|}{C}}\text{-}\overset{|}{N},$$

wobei die beiden letzteren Gruppen über das C-Atom an die $CR^4$-Gruppe gebunden sind.

10. Härtbare Mischungen nach Anspruch 8 und/oder 9, dadurch gekennzeichnet, daß die zur Michael-Addition befähigten Gruppen von einer ungesättigten, höchstens zweibasischen Carbonsäure mit 2 bis 10 C-Atomen abgeleitet sind und diese Gruppen an den Rest eines Polyols oder Polyamins gebunden sind.

11. Härtbare Mischungen nach Anspruch 10, dadurch gekennzeichnet, daß das Polyol oligomer oder polymer ist und eine OH-gruppenhaltige Verbindung aus der Gruppe Polyester, Epoxidharz, Acrylatharz oder Polyurethan darstellt.

12. Härtbare Mischungen nach mindestens einem der Ansprüche 8 bis 11, dadruch gekennzeichnet, daß das Äquivalent-Verhältnis von (A) zu (B) 2 : 1 bis 1 : 2 beträgt.

13. Härtbare Mischungen nach mindestens einem der Ansprüche 8 bis 11, dadurch gekennzeichnet, daß sie zusätzlich Katalysatoren aus der Gruppe der Amide, Guanidine, Amidine, Phosphane, quartären Ammoniumfluoride oder -hydroxide sowie Alkalialkoholate enthalten.

14. Verwendung der härtbaren Mischungen gemäß mindestens einem der Ansprüche 8 bis 13 in Lackzubereitungen, insbesondere Autoreparaturlacken.

## Revendications

**Revendications pour les Etats contractants suivants : AT, BE, CH, DE, FR, GB, GR, IT, LI, LU, NL, SE**

1. Composant (A) durcissable comportant des groupes CH actifs, caractérisé en ce qu'il comporte au moins deux groupes de formule (I)

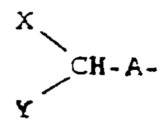

(I)

ou des motifs de structure de formule (I') ou (I'')

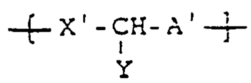

(I')

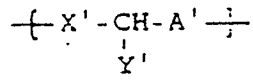

(I'')

formules dans lesquelles
A représente

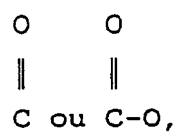

ou ,

ce dernier groupe étant relié par l'intermédiaire de l'atome de C au groupe CH ;

X et Y sont identiques ou différents et représentent chacun un groupe

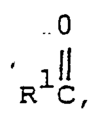

,

$CO_2R^1$, CN, $NO_2$, $CONH_2$, $CONR^1H$, $CONR^1R^1$, où les restes $R^1$ peuvent être identiques ou différents et représentent chacun un reste d'hydrocarbure, avantageusement un reste alkyle ayant 1 à 12 atomes de C, qui peut également être interrompu par de l'oxygène ou par un reste N-alkyle, à la condition qu'un seul des deux restes X, Y puisse représenter le groupe $NO_2$ ;
A' représente

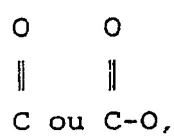

ou ,

ce dernier groupe étant relié par l'intermédiaire de l'atome de C au groupe CH ;

X' et Y' sont identiques ou différents et représentent chacun

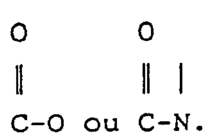

ou .

2. Composant durcisseur selon la revendication 1, caractérisé en ce qu'il possède la formule (II)

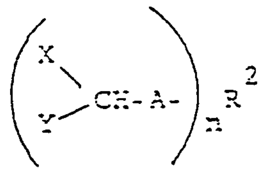 (II)

dans laquelle X, Y et A ont le sens précité ;

$R^2$ représente le reste d'un polyol $R^2(OH)_n$ (lorsque A représente

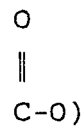

ou

$R^2$ représente le reste d'un acide polycarboxylique $R^2(CO_2H)_n$ (quand A représente

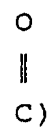

et n vaut au moins deux.

3. Composant durcisseur selon la revendication 2, caractérisé en ce que $R^2$ représente le reste d'un polyol comportant 2 à 12 atomes de C, et n vaut 2 à 4.

4. Composant durcisseur selon la revendication 2, caractérisé en ce que $R^2$ représente le reste d'une résine de polyol $R^2(OH)_n$, formule dans laquelle n vaut 2 à 200.

5. Composant durcisseur selon la revendication 2, caractérisé en ce que $R^2$ représente le reste d'un acide polycarboxylique, $R^2(CO_2H)_n$, formule dans laquelle n vaut 2 à 4.

6. Procédé pour préparer le composant durcisseur selon l'une au moins des revendications 1 à 5, caractérisé en ce qu'on soumet des composés de formule (V)

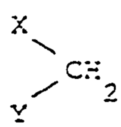 (V)

(dans laquelle X et Y ont le sens ci-dessus) à acylation, carboxylation ou nitration, à la condition que, dans le cas de la nitration, au moins l'un des deux restes X/Y doit représenter le reste $CO_2R^1$ et aucun ne doit représenter $NO_2$, et l'on soumet ensuite les produits ainsi obtenus éventuellement à une transestérification avec des polyols ou à une transamidation avec des polyamines.

7. Procédé pour préparer le composant durcisseur selon l'une au moins des revendications 1 à 5, caractérisé en ce qu'on soumet des composés de formule (VI)

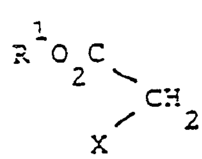 (VI)

(dans laquelle $R^1$ et X ont le sens précité) à une transestérification avec des polyols ou à une transamidation avec des polyamines, et en ce qu'on effectue ensuite l'acylation, la carboxylation ou la nitration des produits

de transestérification ainsi obtenus.

8. Procédé selon la revendication 6 ou 7, caractérisé en ce que l'acylation est effectuée à l'aide de chlorure d'acides monocarboxyliques ou polycarboxyliques et en ce que la carboxylation est effectuée à l'aide de chloroformiate de monoalcools ou de polyalcools.

9. Procédé selon l'une au moins des revendications 6 à 8, caractérisé en ce qu'on utilise comme composés (V) ou (VI) un malonate de dialkyle, un acétoacétate d'alkyle, un cyano-acétate d'alkyle ou des β-dicétones.

10. Procédé selon l'une au moins des revendications 6 à 9, caractérisé en ce que la transestérification a lieu à l'aide de polyalcools comportant 2 à 12 atomes de C.

11. Mélanges durcissables, qui contiennent le composant durcisseur (A) selon l'une au moins des revendications 1 à 5, avec un composé (B) qui présente au moins deux groupes aptes à l'addition de Michael.

12. Mélanges durcissables selon la revendication 11, caractérisés en ce que le composé (B) contient au moins deux groupes de formule (VII)

$$R^3R^4C = CR^4\text{-}B— \quad (VII)$$

dans laquelle

$R^3$ représente un atome d'hydrogène ou un reste d'hydrocarbure, avantageusement un reste alkyle, ayant 1 à 12, avantageusement 1 à 4, atomes de carbone ;

les $R^4$, identiques ou différents, représentent chacun un atome d'hydrogène, un reste d'hydrocarbure, avantageusement un reste alkyle ayant 1 à 10, avantageusement 1 à 4, atomes de carbone, un groupe ester —$CO_2R^1$, un groupe —CN, —$NO_2$, —$SO_2$, —$CONHR^1$, —$CONR^1R^1$ ou —$COR^1$, dans lesquels $R^1$ a le sens ci-dessus ; B représente un groupe

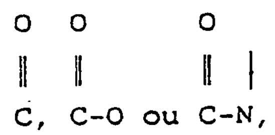

ces deux derniers groupes étant reliés par l'intermédiaire de l'atome de C au groupe $CR^4$.

13. Mélanges durcissables selon la revendication 11 et/ou 12, caractérisés en ce que des groupes aptes à l'addition de Michael dérivent d'un acide carboxylique insaturé, au maximum dibasique (diacide) comportant 2 à 10 atomes de carbone, et en ce que ces groupes sont fixés sur le reste d'un polyol ou d'une polyamine.

14. Mélanges durcissables selon la revendication 13, caractérisés en ce que le polyol est un oligomère ou un polymère et représente un composé contenant des groupes OH, et qui est choisi dans l'ensemble formé par des polyesters, une résine époxyde, une résine acrylique ou du polyuréthanne.

15. Mélanges durcissables selon l'une au moins des revendications 11 à 14, caractérisés en ce que le rapport entre les équivalents de (A) et (B) vaut de 2 : 1 à 1 : 2.

16. Mélanges durcissables selon l'une au moins des revendications 11 à 14, caractérisés en ce qu'ils contiennent en outre des catalyseurs choisis dans l'ensemble formé par des amides, des guanidines, des amidines, des phosphanes, des fluorures ou hydroxydes d'ammoniums quaternaires ainsi que des alcoolates alcalins.

17. Utilisation des mélanges durcissables selon l'une au moins des revendications 11 à 16 dans des préparations de peintures et vernis, en particulier des laques, peintures ou vernis pour la réparation d'automobiles.

**Revendications pour l'Etat contractant suivant : ES**

1. Procédé pour préparer un composant (A) durcissable comportant des groupes CH actifs, qui contient au moins deux groupes de formule (I)

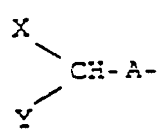

(I)

ou des motifs de structure de formule (I') ou (I")

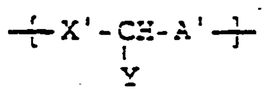 (I') 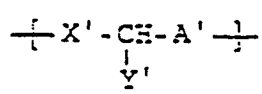 (I")

formules dans lesquelles
A représente

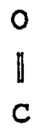 ou 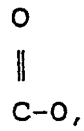

ce dernier groupe étant relié par l'intermédiaire de l'atome de C au groupe CH ;

X et Y sont identiques ou différents et représentent chacun un groupe

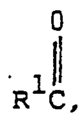

$CO_2R^1$, CN, $NO_2$, $CONH_2$, $CONR^1H$, $CONR^1R^1$, où les restes $R^1$ peuvent être identiques ou différents et représentent chacun un reste d'hydrocarbure, avantageusement un reste allyle ayant 1 à 12 atomes de C, qui peut également être interrompu par de l'oxygène ou par un reste N-alkyle, à la condition qu'un seul des deux restes X, Y puisse représenter le groupe $NO_2$ ;
A' représente

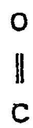 ou 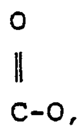

ce dernier groupe étant relié par l'intermédiaire de l'atome de C au groupe CH ;

X' et Y' sont identiques ou différents et représentent chacun

procédé caractérisé en ce qu'on soumet des composés de formule (V)

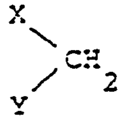 (V)

(dans laquelle $R^1$ et X ont le sens ci-dessus) à une acylation, une carboxylation ou une nitration, à la condition que, dans le cas de la nitration, au moins l'un des deux restes X/Y doit représenter le reste —$CO_2R^1$ et aucun ne doit représenter $NO_2$, et l'on soumet ensuite les produits ainsi obtenus éventuellement à une transestérification avec des polyols ou à une transamidation avec des polyamines.

**2.** Procédé pour préparer le composant durcisseur selon la revendication 1, caractérisé en ce qu'on soumet des composés de formule (VI)

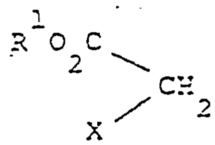

(VI)

(dans laquelle $R^1$ et X ont le sens précité) à une transestérification avec des polyols ou à une transamidation avec des polyamines, et l'on effectue ensuite l'acylation, la carboxylation ou la nitration des produits de transestérification ainsi obtenus.

3. Procédé selon la revendication 1 ou 2, caractérisé en ce qu'on effectue l'acylation à l'aide de chlorure d'acides monocarboxyliques ou polycarboxyliques et en ce que la carboxylation est effectuée à l'aide de chloroformiate de monoalcools ou de polyalcools.

4. Procédé selon l'une au moins des revendications 1 à 3, caractérisé en ce qu'on utilise comme composés (V) ou (VI), des malonates de dialkyles, des acétoacétates d'alkyles, des cyano-acétates d'alkyles ou des β-dicétones.

5. Procédé selon l'une au moins des revendications 1 à 4, caractérisé en ce que la transestérification a lieu à l'aide de polyalcools comportant 2 à 12 atomes de C.

6. Procédé selon l'une au moins des revendications 1 à 5, caractérisé en ce que le composant durcisseur (A) possède la formule (II)

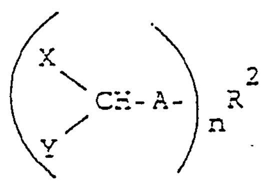

(II)

dans laquelle X, Y et A ont le sens ci-dessus,

$R^2$ représente le reste d'un polyol $R^2(OH)_n$ (lorsque A représente

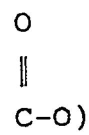

ou

$R^2$ représente le reste d'un acide polycarboxylique $R^2(CO_2H)_n$ (quand A représente

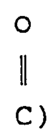

et n vaut au moins deux.

7. Procédé selon la revendication 6, caractérisé en ce que $R^2$ représente le reste d'un polyol comportant 2 à 12 atomes de C, et n vaut 2 à 4, ou bien le reste d'une résine de polyol $R^2(OH)_n$, dans laquelle n vaut 2 à 200, ou le reste d'un acide polycarboxylique $R^2(CO_2H)_n$ dans lequel n vaut 2 à 4.

8. Mélanges durcissables, qui contiennent le composant durcisseur (A) selon l'une au moins des revendications 1 à 7, avec un composé (B) qui présente au moins deux groupes aptes à la réaction de Michael.

9. Mélanges durcissables selon la revendication 8, caractérisés en ce que le composé (B) contient au moins deux groupes de formule (VII)

$$R^3R^4C = CR^4\text{-}B\text{—} \quad (VII)$$

dans laquelle

$R^3$ représente un atome d'hydrogène ou un reste d'hydrocarbure, avantageusement un reste alkyle, ayant

1 à 12, avantageusement 1 à 4, atomes de C ;
les $R^4$, identiques ou différents, représentent chacun un atome d'hydrogène, un reste d'hydrocarbure, avantageusement un reste alkyle ayant 1 à 10, avantageusement 1 à 4, atomes de C, un groupe ester $—CO_2R^1$, un groupe—CN, $—NO_2$, $—SO_2$, $—CONHR^1$, $—CONR^1R^1$ ou $—COR^1$, où $R^1$ a le sens ci-dessus;
B représente un groupe

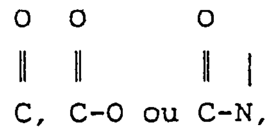

ces deux derniers groupes étant reliés par l'intermédiaire de l'atome de C au groupe $CR^4$.

10. Mélanges durcissables selon la revendication 8 et/ou 9, caractérisés en ce que les groupes aptes à l'addition de Michael dérivent d'un acide carboxylique insaturé, au maximum dibasique (diacide) comportant 2 à 10 atomes de C, et en ce que ces groupes sont fixés sur le reste d'un polyol ou d'une polyamine.

11. Mélanges durcissables selon la revendication 10, caractérisés en ce que le polyol est un oligomère ou un polymère et il représente un composé contenant des groupes OH, et qui est choisi dans l'ensemble formé par des polyesters, une résine époxyde, une résine acrylique ou du polyuréthanne.

12. Mélanges durcissables selon l'une au moins des revendications 8 à 11, caractérisés en ce que le rapport entre les équivalents de (A) et (B) se situe entre 2 : 1 et 1 : 2.

13. Mélanges durcissables selon l'une au moins des revendications 8 à 11, caractérisés en ce qu'ils contiennent en outre des catalyseurs choisis parmi des amides, des guanidines, des amidines, des phosphanes, des fluorures ou hydroxydes d'ammoniums quaternaires ainsi que des alcoolates alcalins.

14. Utilisation des mélanges durcissables selon l'une au moins des revendications 8 à 13 dans des préparations de peintures et vernis, en particulier des laques, peintures ou vernis pour la réparation d'automobiles.

## Claims

### Claims for the following Contracting States : AT, BE, CH, DE, FR, GB, GR, IT, LI, LU, NL, SE

1. A curing component (A) containing active CH groups, characterized in that it contains at least two groups of the formula (I)

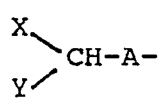

(I)

or structural units of the formula (I') or (I'')

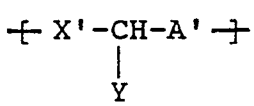

(I')

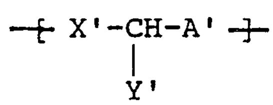

(I'')

in which :
A denotes

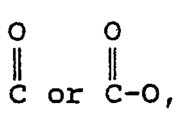

the latter group being bonded to the CH group via the carbon atom ;
X and Y are identical or different and denote

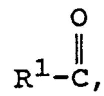

$CO_2R^1$, CN, $NO_2$, $CONH_2$, $CONR^1H$ or $CONR^1R^1$, where the $R^1$ radicals may be identical or different and represent a hydrocarbon radical, preferably an alkyl radical having 1 to 12 carbon atoms, which may also be interrupted by oxygen or an N-alkyl radical, with the proviso that only one of the two radicals X and Y may represent the $NO_2$ group ;

A′ denotes

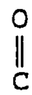 or 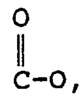

the latter group being bonded to the CH group via the carbon atom ;

X′ and Y′ are identical or different and denote

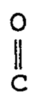 or 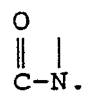

2. A curing component as claimed in claim 1, characterized in that it corresponds to formula (II)

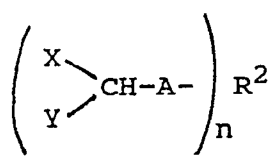 (II)

in which X, Y and A have the above meaning ;

R2 represents the radical of a polyol

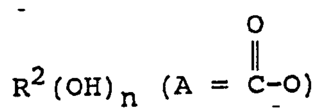

or the radical of a polycarboxylic acid

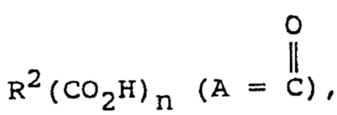

and n denotes at least two.

3. A curing component as claimed in claim 2, characterized in that $R^2$ denotes the radical of a polyol having 2 to 12 carbon atoms, and n represents 2 to 4.

4. A curing component as claimed in claim 2, characterized in that $R^2$ denotes the radical of a polyol resin $R^2(OH)_n$ in which n is 2 to 200.

5. A curing component as claimed in claim 2, characterized in that $R^2$ represents the radical of a polycarboxylic acid $R^2(CO_2H)_n$ in which n is 2 to 4.

6. A process for the preparation of a curing component as claimed in any of claims 1 to 5, characterized in that it comprises acylating, carboxylating or nitrating compounds of the formula (V)

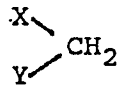
(V)

in which X and Y have the above meaning, with the proviso that, in the case of nitration, at least one of the two radicals X any Y must denote the —$CO_2R^1$ radical and neither represents $NO_2$, and the products thus obtained are subsequently optionally transesterified using polyols or transamidated using polyamines.

7. A process for the preparation of a curing component as claimed in any of claims 1 to 5, characterized in that compounds of the formula (VI)

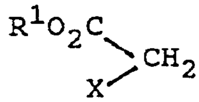
(VI)

in which $R^1$ and X have the above meaning, are transesterified using polyols or transamidated using polyamines, and the transesterification products thus obtained are subsequently acylated, carboxylated or nitrated.

8. The process as claimed in claim 6 or 7, characterized in that the acylation is carried out using chlorides of monobasic or polybasic carboxylic acids and the carboxylation is carried out using chloroformates of monohydric or polhydric alcohols.

9. The process as claimed in at least one of claims 6 to 8, characterized in that the compounds (V) or (VI) employed are dialkyl malonates alkyl acetoacetates, alkyl cyanoacetates or β-diketones.

10. The process as claimed in at least one of claims 6 to 9, characterized in that the transesterification is carried out using polyhydric alcohols having 2 to 12 carbon atoms.

11. Curable mixtures containing the curing component (A) as claimed in at least one of claims 1 to 5 together with a compound (B) which contains at least two groups capable of Michael addition.

12. Curable mixtures as claimed in claim 11, characterized in that the compound (B) contains at least two groups of the formula (VII)

$$R^3R^4C = CR^4\text{-}B\text{—} \quad \text{(VII)}$$

in which :

$R^3$ denotes hydrogen or a hydrocarbon radical, preferably an alkyl radical, having 1 to 12, preferably 1 to 4, carbon atoms ;

$R^4$ are identical or different and denote hydrogen, a hydrocarbon radical, preferably an alkyl radical, having 1 to 10, preferably 1 to 4, carbon atoms, an ester group $CO_2R^1$, or a —CN—, $NO_2$—, —$SO_2$—, —$CONHR^1$—, —$CONR^1R^1$ or —$COR^1$ group where $R^1$ has the above meaning ; and B denotes

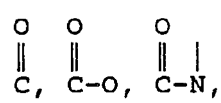

the two latter groups being bonded to the $CR^4$ group via the carbon atom.

13. Curable mixtures as claimed in claim 11 and/or 12, characterized in that the groups which are capable of Michael addition are derived from an unsaturated, at most dibasic carboxylic acid having 2 to 10 carbon atoms, and these groups are bonded to the radical of a polyol or polyamine.

14. Curable mixtures as claimed in claim 13, characterized in that the polyol is oligomeric or polymeric and is an OH group-containing compound from the group comprising polyesters, epoxy resins, acrylate resins and polyurethanes.

15. Curable mixtures as claimed in at least one of claims 11 to 14, characterized in that the (A) : (B) equivalent ratio is 2 : 1 to 1 : 2.

16. Curable mixtures as claimed in at least one of claims 11 to 14, characterized in that they additionally contain catalysts from the group comprising the amides, guanidines, aminidines, phosphines, quaternary ammonium fluorides or ammonium hydroxides, and alkali metal alkoholates.

17. The use of a curable mixture as claimed in at least one of claims 11 to 16, in surface-coating preparations, in particular in automobile repair paints.

**Claims for the following Contracting States : ES**

1. A process for the preparation of a curing component (A) containing active CH groups, which contains at least two groups of the formula (I)

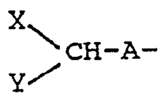 (I)

or structural units of the formula (I') or (I")

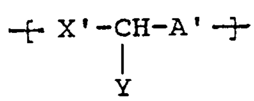 (I') 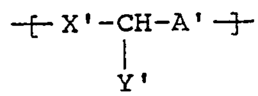 (I'')

in which :
A denotes

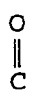 or 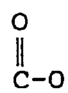,

the latter group being bonded to the CH group via the carbon atom ;
X and Y are identical or different and denote

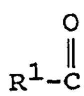,

$CO_2R^1$, CN, $NO_2$, $CONH_2$, $CONR^1H$ or $CONR^1R^1$, where the $R^1$ radicals may be identical or different and represent a hydrocarbon radical, preferably an alkyl radical having 1 to 12 carbon atoms, which may also be interrupted by oxygen or an N-alkyl radical, with the proviso that only one of the two radicals X and Y may represent the $NO_2$ group ;
A' denotes

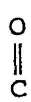 or 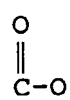,

the latter group being bonded to the CH group via the carbon atom ;
X' and Y' are identical or different and denote

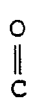 or 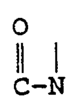,

characterized in that compounds of the formula (V)

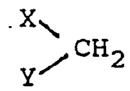 (V)

in which X and Y have the above meaning, are acylated, carboxylated or nitrated, with the proviso that, in the case of nitration, at least one of the two radicals X any Y must denote the—$CO_2R^1$ radical and neither represents $NO_2$, and the products thus obtained are subsequently optionally transesterified using polyols or transamidated using polyamines.

2. A process for the preparation of a curing component as claimed in claim 1, characterized in that compounds of the formula (VI)

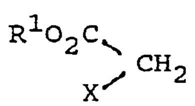 (VI)

in which $R^1$ and X have the above meaning, are transesterified using polyols or transamidated using polyamines, and the transesterification products thus obtained are subsequently acylated, carboxylated or nitrated.

3. The process as claimed in claim 1 or 2, characterized in that the acylation is carried out using chlorides of monobasic or polybasic carboxylic acids and the carboxylation is carried out using chloroformates of monohydric or polhydric alcohols.

4. The process as claimed in at least one of claims 1 to 3, characterized in that the compounds (V) or (VI) employed are dialkyl malonates alkyl acetoacetates, alkyl cyanoacetates or β-diketones.

5. The process as claimed in at least one of claims 1 to 4, characterized in that the transesterification is carried out using polyhydric alcohols having 2 to 12 carbon atoms.

6. The process as claimed in at least one of claims 1 to 5, characterized in that the curing component (A) has the formula (II)

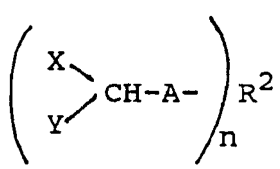 (II)

in which X, Y and A have the above meaning,
R2 represents the radical of a polyol

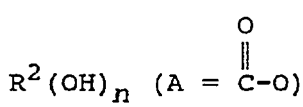

or the radical of a polycarboxylic acid

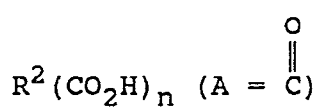,

and n denotes at least two.

7. A curing component as claimed in claim 2, characterized in that $R^2$ denotes the radical of a polyol having 2 to 12 carbon atoms and n represents 2 to 4 ; or denotes the radical of a polyol resin $R^2(OH)_n$ in which n is 2 to 200 ; or represents the radical of a polycarboxylic acid $R^2(CO_2H)_n$ in which n is 2 to 4.

8. Curable mixtures containing the curing component (A) as claimed in at least one of claims 1 to 7 together with a compound (B) which contains at least two groups capable of Michael addition.

9. Curable mixtures as claimed in claim 8, characterized in that the compound (B) contains at least two groups of the formula (VII)

$$R^3R^4C = CR^4\text{-}B\text{—} \quad (VII)$$

in which :

$R^3$ denotes hydrogen or a hydrocarbon radical, preferably an alkyl radical, having 1 to 12, preferably 1 to 4, carbon atoms ;

$R^4$ are identical or different and denote hydrogen, a hydrocarbon radical, preferably an alkyl radical, having 1 to 10, preferably 1 to 4, carbon atoms, an ester group $CO_2R^1$, or a —CN—, $NO_2$—, —$SO_2$—, —$CONHR^1$—, —$CONR^1R^1$ or —$COR^1$ group where $R^1$ has the above meaning ; and B denotes

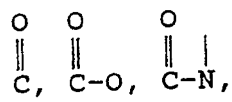

the two latter groups being bonded to the $CR^4$ group via the carbon atom.

10. Curable mixtures as claimed in claim 8 and/or 9, characterized in that the groups which are capable of Michael addition are derived from an unsaturated, at most dibasic carboxylic acid having 2 to 10 carbon atoms, and these groups are bonded to the radical of a polyol or polyamine.

11. Curable mixtures as claimed in claim 10, characterized in that the polyol is oligomeric or polymeric and is an OH group-containing compound from the group comprising polyesters, epoxy resins, acrylate resins and polyurethanes.

12. Curable mixtures as claimed in at least one of claims 8 to 11, characterized in that the (A) : (B) equivalent ratio is 2 : 1 to 1 : 2.

13. Curable mixtures as claimed in at least one of claims 8 to 11, characterized in that they additionally contain catalysts from the group comprising the amides, guanidines, aminidines, phosphines, quaternary ammonium fluorides or ammonium hydroxides, and alkali metal alkoholates.

14. The use of a curable mixture as claimed in at least one of claims 8 to 13, in surface-coating preparations, in particular in automobile repair paints.